(19) Europäisches Patentamt
European Patent Office
Office européen des brevets

(11) Publication number: **0 198 266 B1**

(12) **EUROPEAN PATENT SPECIFICATION**

(45) Date of publication of patent specification: **24.06.92**

(51) Int. Cl.[5]: **C08G 18/67**, C08G 18/08, C08F 283/00, C08J 5/18

(21) Application number: **86103862.8**

(22) Date of filing: **21.03.86**

(54) **Process for the preparation of dense polyurethanic films and their use.**

(30) Priority: **21.03.85 IT 2000285**

(43) Date of publication of application:
**22.10.86 Bulletin 86/43**

(45) Publication of the grant of the patent:
**24.06.92 Bulletin 92/26**

(84) Designated Contracting States:
**AT BE CH DE FR GB LI NL**

(56) References cited:
**EP-A- 0 098 752**
**FR-A- 2 099 457**
**US-A- 4 153 778**

(73) Proprietor: **ISTITUTO GUIDO DONEGANI S.p.A.**
**Via Caduti del Lavoro**
**I-28100 Novara(IT)**

Proprietor: **AUSCHEM S.p.A.**
**Via de Notaris, 50**
**Milan(IT)**

(72) Inventor: **Bastioli, Catia, Dr.**
**23, Via Rivolta**
**I-28100 Novara(IT)**
Inventor: **Gianotti, Giuseppe**
**9, via Palladio**
**I-28100 Novara(IT)**
Inventor: **Turco, Pietro**
**13, via Venezia**
**I-21052 Busto Arsizio, Varese(IT)**
Inventor: **Trovati, Aldo**
**1, via Borsi**
**I-28100 Novara(IT)**

(74) Representative: **Zumstein, Fritz, Dr. et al**
**Dr. F. Zumstein Dr. E. Assmann Dipl.-Ing. F. Klingseisen Bräuhausstrasse 4**
**W-8000 München 2(DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a process for the preparation of dense polyurethane films.

More particularly the invention relates to dense polyurethane films, suited to be used for the enrichment of the air in oxygen.

Membrane gaseous separations and in particular the enrichment of the air in oxygen are of always wider industrial interest, as they allow to obtain significant energy savings in the combustion, in the production of chemical substances by oxidative way, in the production of ammonia and methanol and so on. Although in the later decade a lot of polymeric materials have been studied, to be used in such field, no product has been yet obtained, capable to achieve high permeabilities towards the gases together with high separation factors $O_2/N_2$.

Polysiloxane, one of the most studied and used elastomeric materials, for instance, presents a permeability towards $O_2$, that is among the highest ones, whereas the spearation factor $O_2/N_2$ is very low (~2). That entails the impossibility to achieve oxygen enrichments over 30 %, and, for a fixed percentage of oxygen enrichment, the use of working pressure gradients higher in comparison with materials at high separation factors.

In the class of the elastomeric polyurethanes there are some polymers having a high permeability towards gases and vapours. A few of these are described in Japanese patent application No. 74026702.

According to what is described in the above application, films of elastomeric polyurethanes are obtained: a)by adding an aliphatic carboxylic acid having up to 4 carbon atoms, in amounts ranging between 6-40%, to a solution of an elastomer polyurethane, whose segments consist of polyester-glycol or of a mixture of polyester-glycol and polyether-glycol, and b) by coagulating the solution in a bath consisting of a solvent and of a non-solvent for the elastomer, such as dimethyl-formamide or dimethyl-acetamide and water.

A part from the drawbacks of the process due to the use of an organic solvent, the obtained films present a separation factor, that is not yet completely satisfactory especially when they are employed for the enrichment of oxygen in the air.

An object of the present invention is to obtain elastomeric films which, besides having permeabilities comparable with those of the polyxiloxane films, allow to obtain higher separation factors $O_2/N_2$, with respect to the latter.

Another object of the present invention is to obtain films of polymeric materials which may be prepared easily and economically.

A further object of the present invention is to obtain films of polymeric materials that may be coupled with polymeric films of different nature, without utilizing solvents and therefore without damaging and destroying the latter.

Now it has been found that the said objects are attained by using a dense film either of a hydro-dispersable polyurethane containing ionizable groups inside the macromolecule in amounts ranging between 10 and 60 meq/100 g of dry product, or of a hydro-dispersable polymer of $\alpha$-$\beta$-ethylenically unsaturated monomers, modified by at least 5% by weight of an oligourethane containing ionizable groups and functional $\alpha$-$\beta$-unsaturated end groups of acrylic and/or methacrylic nature.

The hydro-dispersable polyurethanes containing ionizable groups inside the macromolecule are already known and described in issued EP-A-98752. Said polyurethanes are obtained according to a process consisting in:

a) preparing firstly a polyisocyanate prepolymer, by reacting, at a temperature not over 100 °C, an organic diisocyanate and a mixture consisting of a diol containing ionizable groups and of a substantially linear macroglycol, having a molar weight ranging between 500 and 5000, in such amounts that the molar ratio between the isocyanate groups and the sum of the hydroxyl groups of macroglycol and of diol ranges between 1.2 and 2.O;

b) preparing an oligourethane containing ethylenically unsaturated end groups by reacting the polyisocyanic prepolymer obtained hereinbefore with a hydroxy-alkyl-acrylate and/or a hydroxy-alkyl-methacrylate having formula:

$$CH_2 = \underset{\displaystyle R}{\underset{|}{C}} - COOX \qquad (I)$$

wherein R is hydrogen or-$CH_3$ and X is a hydroxyalkyl radical containing from 1 to 8 carbon atoms, at a temperature below 150 ° C and in such amounts that the ratio by equivalents between the free isocyanate NCO groups and the OH groups of hydroxy-alkyl-acrylate or methacrylate having formula (I), ranges between 0.2 and 1.1, and preferably between 0.4 and 0.6;

c) salifying the free ionizable groups of oligourethane to hydrophilic cations or anions such as, respectively, quaternary ammonium and carboxylate, sulphonate, or phosphonate groups, and

d) subjecting to a polymerization treatment the unsaturated end groups of oligourethane, containing hydrophilic cationic or anionic groups, in an aqueous dispersion, in the presence of radical catalysts and at a temperature not over 100 ° C, in order to obtain an aqueous dispersion of polyurethane having a pre-established reticulation degree. The reticulation degree can be regulated by addition of copolymers in polymerization phase.

The formation of polyisocyanate prepolymer and the subsequent reaction with hydroxy-alkyl-acrylate and/or methacrylate having formula (I) may be carried out in complete absence of organic solvents and in the presence or not of known catalysts such as tin-organic compounds, tertiary amines.

For the preparation of the polyisocyanic prepolymer use may be made of macroglycols having a molar weight ranging between 500 and 5000, preferably between 800 and 3000, selected among saturated polyesters, polyethers and polyesters-urethanes.

Examples of utilizable macroglycols are: the polyesters obtained by polycondensation of bicarboxylic acids or anhydrides, preferably the aliphatic ones, having from 4 to 9 carbon atoms, with aliphatic diols having 2-8 carbon atoms, which can be used singly or mixed together;

the polyesters obtained by polycondensation on diolic "starters" of $\epsilon$-caprolactone; the polyaddition products of the above mentioned polyesters with organic diisocyanates in molar deficiency; polyethylene glycol; polypropylene glycol; the polymerization products of tetrahydrofuran, etc. These macroglycols may be use singly or in mixture with small amounts of a polyalcohol haying a low molecular weight, of bi or tri-functional type, such as 1,4-butanediol, 1,6-hexanediol, tri-methylolpropane, glycerol, 1,2,6-hexanetriol etc.

The utilizable organic diisocyanates may be both of aliphatic and of cycloaliphatic type.

Examples of utilizable diisocyanates are: 4-4'-dicyclohexil-methanediisocyanate; 1-isocyanate-3-isocyanate-methyl-3,5,5-trimethylcyclohexane (or isophoronediisocyanate); 2,2,4-trimethylhexanethylenediisocyanate in mixture with isomer 2,4,4-trimethylhexamethylenediisocyanate, etc.

As ionizable diols, use may be made of the ones capable of bestowing on the polyurethane macromolecule a preferably anionic charge, such as for instance: diols containing at leapt a free carboxylic group, diols containing at least a phosphonic group; diols containing at least a sulphonic group. In practice one prefers to use diols containing at leapt a free carboxylic group bound to the same carbon atom holding the two hydroxyl groups, for instance dimethylolacetic, dimethylolpropionic and dimethylolbutyric acid.

Furthermore use may be made of the compounds containing at least two hydroxyl groups and a carboxylic group, that is not bound to the same carbon atom, such as for instance the products of hemiesterification of triols with aliphatic bicarboxylic anhydrides. As ionizable diols use may be also made of alkyl-dialkanol-amines, such as methyl-di-ethanol-amine, butyl-di-ethanol-amine and methyl-di-isopropanol-amine.

The free ionizable groups, distributed statistically on the oligourethane chain, are successively salified both by means of inorganic bases such as sodium, potassium or ammonium hydroxide, and,preferably, by means of amines or tertiary alkanolamines such as triethylamine, dimethyl-ethanol-amine and methyl-diethanol-amine.

The teriary nitrogen atom of the tertiary alkyl-dialkanol amines is salified by means of organic or inorganic acids such as hydrochloric, phosphoric and acetic acid.

The salification of the oligourethane may be carried out by simple addition of the salifying agent either as such or dissolved in water and/or solvents at a temperature of about 60 ° C. Should the oligourethane have a too high viscosity at such temperatures, a dilution of same is suitable, before the salification, by means of solvents which are preferably miscible in water and have a boiling temperature below that of water, so that they may be removed by distillation.

The amount of solvent, that is usually used, is not over the fifth of the oligourethane weight. The preferred solvents are: acetone, methyl-ethylketone, tetrahydrofuran.

When the salification is over, subject to an optional dilution in organic solvents as described hereinbefore, the oligourethane is diluted in any ratio with water. Therefore one starts the dispersion in water, in order to obtain oligourethane concentrations which are variable, according to the content in ionizable groups. Concentrations ranging between 20 and 60% by weight and preferably between 30 and 50% by weight, are preferred.

The unsaturated oligourethane, dissolved or dispersed in water as described hereinbefore, may be then

polymerized by known techniques of radicalic polymerization.

As catalysts use may be made of organic peroxides or hydroperoxides, such as benzoyl peroxide, dicumyl peroxide, ter-butyl-hydroperoxide, cumene hydroperoxide, p-menthane hydroperoxide, or sodium, potassium, ammonium persulfate, used singly or in combination with reducers such as sodium metabisulphite and sodium-formaldehyde-sulfoxylate.

The polymerization temperature is not over 100 ° C and preferably ranges between 10 and 100 ° C, depending on the type of initiator or of the couple initiator-reducer; the most preferred temperature range is between 50 ° and 70 ° C.

The presence of oligourethanes containing at least 2 unsaturated end groups leads to the formation of reticulated tridimensional macromolecular structures and the reticulation degree can be regulated at will, by carrying out the polymerization in the presence of other mono or polyfunctional ethylenically unsaturated monomers such as methyl, ethyl, butyl acrylates or methacrylates, vinyl esters, styrene, trimethylolpropane-triacrylate and trimethacrylate, pentacrythritol triacrylate and trimethacrylate, 1,6-hexanediol diacrylate, neopentylglycol di-acrylate and di-methacrylate, di-ethylene glycol di-acrylate and tetraethylene glycol di-acrylate.

The hydrodispersable polymers of α-β-ethylenically unsaturated monomers modified by at least 5% by weight of an oligourethane containing ionizable groups and functional α-β-unsaturated end groups of acrylic and/or methacrylic nature, are described in EP-A-183 119 and are obtained by polymerization of one or more α-β-ethylenically unsaturated monomers in the presence of an aqueous dispersion of the oligourethane obtained in above reported stage c) and containing salified ionizable groups and functional α-β-unsaturated end groups of acrylic and/or methacrylic nature.

Oligourethanes having a molecular weight ranging between 2.000 and 50.000 and containing at leapt two ethylenically unsaturated end groups, are preferred.

The presence of α-β-unsaturated groups in the oligourethanes ensures a good copolymerization with the ethylenically unsaturated monomers, thereby allowing the formation of homogeneous structures. These oligourethanes, containing unsaturated acrylic and/or methacrylic end groups, may be used in any ratio with respect to the α-β-unsaturated monomers to be polymerized. Usually, the higher the oligourethane amount, the higher the characteristics of chemical and physical resistance of the films, due to the increase of the reticulation degree of the finished polymer.

The high reticulation of the polymer is due both to the ethylenic bifunctionality of oligourethane itself and to the well known tendency of the urethanic groups to form cross-linkings through formation of hydrogen bridges. Use may be made of oligourethane amounts up to 90% by weight referred to the finished copolymer. In practice, amounts ranging between 10 and 60% by weight are preferred.

The unsaturated oligourethane, dissolved or dispersed in water, is copolymerized with α-β-ethylenically unsaturated monomers, according to known techniques of radical polymerization.

The polymerization is carried out preferably by feeding the monomer or the mixture of α-β-ethylenically unsaturated monomers as such into the aqueous dispersion of the preformed oligourethane.

With the term "α-β-ethylenically unsaturated monomers", as used in the present application and in the claims, any compound is meant, containing the bond:

$$>C=C<$$

which can be polymerized or copolymerized with another similar comonomer in the presence of the unsaturated oligourethane dissolved or dispersed in water of the type above reported, using radicalic catalysts.

Examples of α-β-ethylenically unsaturated monomers are: esters of acrylic and methacrylic acids such as ethyl acrylate, butyl acrylate, 2-ethyl-hexyl arylate, cyclo-hexyl-chloro acrylate, isobutyl-chloroacrylate, methyl-chloro acrylate, methyl-methacrylate, butyl-methacrylate, stearyl-methacrylate, phenyl-methacrylate, isopropyl-methacrylate, cyclo-hexyl-methacrylate, 3,3-dimethyl-2-butyl methacrylate etc., acrylonitrile, methacrylonitrile; the corresponding amides such as, acrylamide and methacrylamide optionally in the methylolated form and/or in the form successively eterified with monovalent $C_1$-$C_4$ alcohols; vinyl esters and ethers such as vinyl acetate, vinyl propionate,vinyl chloride, vinylidene chloride, vinyl-ethyl-ether; allyl compounds such as allyl alcohol and allyl acetate.

Use may be also made of monomers containing two or more ethylenically unsaturated groups, such as butandiol diacrylate and dimethacrylate, trimethylpropane triacrylate and trimethacrylate, pentaerythrytol triacrylate and trimethacrylate.

The α-β-ethylenically unsaturated monomers are polymerized in the presence of an aqueous solution or dispersion of unsaturated oligourethanes and using the well known initiators of radical polymerization such

as potassium and ammonium persulphate, hydrogen peroxide, alkyl hydroperoxides such as terbutyl-hydroperoxide, cumene hydroperoxide, p-menthane hydroperoxide, di-cumyl peroxide, benzoyl peroxide and azo-bis-isobutyronitrile. Preferably these initiators are used in the presence of reducing agents, known in the prior art, to lower the temperature of radicalic decomposition, such as sodium metabisulfite, sodium-formaldehyde sulfoxylate, formic acid and ascorbic acid.

Examples of couples initiator/reducer, preferred in the present invention, are: terbutyl-hydroperoxide/sodium-formaldehyde sulfoxylate and hydrogen peroxide/ascorbic acid.

The initiator amounts that are used, range between 0.01 and 1%, preferably between 0.05 and 0.2% by weight, calculated on the total weight of the monomers.

The feed time, both of the monomers and of the initiator may be varied between 2 and 8 hours, preferably between 3 and 5 hours, taking care of feeding the initiator in a period of time 30-60 minutes higher than the one of the monomers.

The polymerization temperatures depend both on the nature of the used monomers and on the used catalytic system; they usually range between 40 and 90 ° C, preferably between 40 and 70 ° C.

At the end of the feed of the initiator and/or of the catalytic couple, the copolymerization is usually over.

The final aqueous solutions, containing from 20 to 60% by weight of dry polymer, are characterized by a high stability during the storing, even if surfactants with a low molecular weight, are completely absent.

The dense films, object of the present invention, are produced by turning into film the aqueous dispersions of polyurethanes containing ionizable groups inside the macromolecule and the polymers of ethylenically unsaturated monomers modified by an oligourethane containing ionizable groups and functional unsaturated acrylic and/or methacrylic groups.

The transformation into film of these aqueous dispersions may be carried out according to any known technique, such as, for instance, by spreading on a polyethylene support or on asymmetric membranes made of polymeric materials, below their glass transition temperature (in order to obtain a composite membrane) or by deposition on a roller or by evaporation of the water content of the dispersion deposited on mercury as well.

According to the "casting" technique, the aqueous dispersion, containing from 20 to 60% by weight of dry polymer, is spread on a plane coated with polyethylene, delimited by edges made of polyvinyl chloride of about 1 mm. The spread dispersion is kept at room temperature till complete evaporation of the water. The film thus obtained can be removed easily and can be heated at 40-60 ° C in an oven for 10-24 hours in order to obtain a further reticulation.

Should the transformation into film be carried out by deposition on a roller, the content by weight of dry polymer in the aqueous dispersion is 5-20%. The dispersion is poured into a small basin, into which a roller coated with Teflon, is dipped. The roller is rotated at a speed ranging between 0.5 and 5 revolutions/minute and a laminar stream of air is blown tangentially to the roller surface. Successive layers of films of polymer deposit in a homogeneous and regular way on the roller surface.

The roller rotation is stopped when the desired thickness of the film is reached. The thickness of the film ranges between 10 and 200 $\mu$m. The film is removed from the roller and, if necessary, subjected to a further reticulation by treatment in an oven at 40-60 ° C for 10-24 hours.

The transformation into film by evaporation of the water on mercury is carried out by pouring slowly an aqueous dispersion of the polymer, containing from 5 to 40% by weight of dry product, onto mercury contained in a crystallization vessel.

The crystallization vessel is laid on an antivibrating plane in order to avoid the film curliness. After complete evaporation of the water, the film is removed and optionally treated in an oven, for a further reticulation, at 40-60 ° C.

The aqueous dispersions of the polymer to be turned into a film, may contain, besides the polymer, other sub stances such as thickening agents, film forming substances, surfactants, etc.

The polyurethane films thus obtained present a permeability towards the oxygen ranging between $6x10^{-8}$ and $2x10^{-9}$ $cm^3$ (STP)cm/$cm^2$ sec. cm Hg and a separation factor oxygen/nitrogen over 2 and up to 4.

Permeability and separation factor are determined by the methods described in example 1.

The present invention will be further explained by the following examples.

EXAMPLE 1

PREPARATION OF THE AQUEOUS POLYURETHANE DISPERSION.

- 254.78 g of polyoxytetramethylene glycol having a molar weight of about 980 (a commercial product

by Du Pont de Nemours with trade mark Terathane 1000);
- 16.08 g of dimethylolpropionic acid
- 0.008 g of benzoyl chloride

were loaded, according to the order described hereinbefore, into a reactor equipped with stirrer, thermometer and reflux cooler, kept under atmosphere of dry nitrogen and dipped in a bath with a temperature regulator.

86.2 g of hexamethylenediisocyanate were added at once at about 40 ° C.

The reaction exothermicity was first controlled, so not to exceed 60 ° C; and then the temperature was raised to 80 ° C, till a content in free isocyanate groups of about 3.8% by weight was reached.

The nitrogen atmosphere was replaced by dry air, then 17.29 g of 2-hydroxypropyl acrylate were added drop by drop.

The reaction was carried on till a content in free isocyanate groups of about 2.4% by weight was reached.

A solution, prepared separately, containing 8.02 g of dimethylethanol amine in 120 ml of deionized water, was added, quick and under strong stirring, to the mass of the prepolymer, afterwards a further addition of 760 g more of deionized water followed immediately.

Then the nitrogen atmosphere and the thermoregulation, by means of a thermostat, of the dispersion obtained at 65 ° C were restored.

12.9 g of an aqueous solution of ter-butylhydroperoxide at 12% by weight were dripped over 2 hours and, at the end, the dispersion was kept at 65 ° C for one more hour.

The final dispersion had a milk-like, translucent aspect, a content of solids of 30% by weight and a content of anionic groups of about 24 meq/100 g of dry substance.

PREPARATION OF THE DENSE FILM.

From the above obtained polyurethanic aqueous dispersion a dense film was prepared, having a thickness of 10 microns, according to the technique relating to the deposition of successive layers on a roller.

Use was made of: a dispersion having a content of solids of 15% by weight; a roller haying a diameter of 12 cm; a roller speed of 1/4 revolution/minute and an evaporation temperature of 60 ° C.

The time used for the preparation was 6 hours.

From the film thus obtained, a disk was drawn having a diameter of 7 cm, that was put into a cell for the permeability measurement and conditioned for 12 hours with a helium flow on both the surfaces. Successively a flow of air at a pressure of 100 cm Hg (7,50 Pa) was conveyed onto the lower surface of the membrane, whereas a flow of helium of 1.4 $cm^3$/second at a pressure of 70 cm Hg (5,25 Pa) was conveyed onto the upper surface. The latter, diluting the permeated gag insures that the difference of partial pressures of $0_2$ and $N_2$, to which the film is subjected, remains constant. The working temperature had been fixed at 30 ° C, whereas the temperature of the environment at 22 ° C.

The conveyance helium had been sampled by means of a Carlo Erba valve and then analysed by means of a Carlo Erba gas chromatograph of Fractovap 4200 series with molecular sieves columns 5A having a diameter of 4 mm and a length of 2 m.

The measurement was carried out at a temperature of the detector equal to 110 ° C. The resultant gas chromatogram was recorded and integrated by means of an integrating recorder Hewlett Packard 3390.

By such process, for the film in question, a permeability was calculated towards $O_2$ ($PO_2$) = $1.5x10^{-8}$ $cm^3$ (STP) cm/$cm^2$ sec cm Hg and a separation factor: $F(O_2/N_2)$ = 2.6.

EXAMPLE 2

PREPARATION OF THE POLYURETHANIC AQUEOUS DISPERSION.

260 g (0.26 moles) of polyoxytetramethylene glycol (produced by Du Pont de Nemours with trade mark Terathane 1000); 16.08 g (0.12 moles) of dimethylolpropionic acid; 0.076 g of benzoyl chloride (as stabilizing agent of the prepolymer) and 86.29 g (0.513 moles) of hexamethylenediisocyanate were loaded in the order described hereinbefore into a reactor equipped with stirrer, thermometer, reflux cooler, system for the regulation of the temperature and compensating tank containing dry nitrogen.

The exothermicity of the reaction was controlled, keeping the temperature of the mass under stirring at about 60 ° C for 30 minutes; then the temperature was brought to 80 ° C and kept at this value till the content in free isocyanate groups was below 3.6-3.8% by weight. 17.29 g (0.133 moles) of 2-hydroxypropylacrylate

were added to the prepolymer thus obtained, cooled down to about 60 ° C and diluted with 90 ml of anhydrous acetone, changing the atmosphere from nitrogen to dry air. The temperature was kept at about 60 ° C till a content in free isocyanate groups of 1.7-1.9% by weight was reached. An aqueous solution of 10.7 g of dimethylethanolamine in 250 cc of deionized water was added, under efficient stirring, over 5 minutes, afterwards immediately the addition followed of further 635 g of deionized water. Then the acetone present was distilled under a weak vacuum.

The final dispersion had a content of dry product of 31% by weight, consisting of an unsaturated oligourethane with a content of 30.7 milliequivalents of salified carboxylic groups per 100 g of dry product and having a calculated molecular weight of about 5500.

145.2 g of the oligourethane dispersion thus obtained and 600 g of deionized water were loaded into a reactor equipped with stirrer, thermometer, cooler, dosing funnels, compensating tank containing nitrogen and dipped in a thermostatic bath.

The dispersion was thermoregulated at 50 ° C by means of a thermostat.

On the reactor 3 dropping funnels were arranged, containing respectively:

- 405 g of a mixture 1/1 by weight consisting of butyl acrylate and methylmethacrylate
- 3.75 g terbutylhydroperoxide in an aqueous solution at 12% by weight, diluted in 125 g of deionized water
- 0.225 g of sodium-formaldehyde sulfoxylate dissolved in 125 g of deionized water.

From the dropping funnels one fed simultaneously about 20 g of the monomer mixture and about 12 g of the aqueous solutions of initiator and reducing agent. One waited for the reaction start to take place, showed by the spontaneous increase of the temperature of about 3-4 ° C, then one started the three feeds, in such a way as to use up the monomer mixture over 3 hours and the two solutions of the catalytic couple over 3.5 hours. During the feeds, the temperature was kept at about 54-55 ° C.

About 60 minutes after the end of the couple feed, the gaschromatographic analysis showed a substantial absence of free monomers.

The final dispersion was practically free from precoagulum, had a content in dry product of 30.8% by weight and a surface tension of 62 dynes/cm.

PREPARATION OF THE DENSE FILM

The film was prepared by evaporation of the water contained in a thin layer of such an aqueous dispersion at 35% of solid substance, deposited on mercury. After 48 hours, at a temperature of 20 ° C, a film was obtained having a thickness of 150 $\mu$m.

The latter, characterized according to the conditions reported in example 1, gave a permeability towards $O_2(PO_2)$ = = $7 \times 10^{-9}$ $cm^3$ (STP) $cm/cm^2$ sec cm Hg and a separation factor $F(O_2/N_2)$ = 3.

## Claims

**1.** A process for the preparation of dense polyurethane films selected from the group consisting of

1) films of a hydro-dispersable polyurethane containing ionizable groups inside the macromolecule in amounts ranging between 10 and 60 meq/100 g of dry product; or

2) films of a hydro-dispersable polymer of $\alpha,\beta$-ethylenically unsaturated monomers modified by at least 5% by weight of an oligourethane containing ionizable groups and functional $\alpha,\beta$-unsaturated end groups of acrylic and/or methacrylic nature

which films have a thickness in the range from 10 to 200 $\mu$m and have a permeability towards oxygen ranging between

$7.99 \cdot 10^{-5}$ and $2.66 \cdot 10^{-6}$ $cm^3$ (STP) $cm/cm^2$ Pa.s ($6 \cdot 10^{-8}$ and $2 \cdot 10^{-9}$ $cm^3$ (STP) $cm/cm^2$ sec. cm Hg) and a separation factor oxygen/nitrogen over 2 and up to 4 , characterized in that aqueous dispersions are evaporated which are produced according to a process consisting in:

a) preparing at first a polyisocyanate prepolymer, by reacting at a temperature not over 100 ° C, an organic diisocyanate and a mixture consisting of a diol containing ionizable groups and a substantially linear macroglycol, having a molecular weight ranging between 500 and 5000, in such amounts that the molar ratio between the isocyanate groups and the sum of the hydroxyl groups of macroglycol and of diol ranges between 1.2 and 2.0;

b) preparing an oligourethane containing ethylenically unsaturated end groups by reacting the above obtained polyisocyanate prepolymer with a hydroxy-alkyl-acrylate and/or a hydroxy-alkyl-methacrylate having formula:

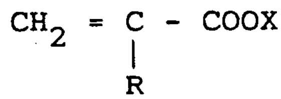

(I)

wherein R is hydrogen or $-CH_3$ and X is a hydroxyalkyl radical containing from 1 to 8 carbon atoms, at a temperature below 150 °C and in such amount that the ratio by equivalents between the free isocyanate NCO groups and the OH groups of hydroxy-alkyl-acrylate or methacrylate of formula (I) ranges between 0.2 and 1.1, and preferably between 0.4 and 0.6;

c) salifying the free ionizable groups of oligourethane to hydrophilic cations or anions, respectively, quaternary ammonium and carboxylic, sulphonic or phosphonic groups, and

d) subjecting to a polymerization treatment:

1) the unsaturated end groups of oligourethane, containing hydrophilic cationic or anionic groups, in an aqueous dispersion, in the presence of radical catalysts at a temperature not over 100 °C, in order to obtain an aqueous dispersion of polyurethane having a pre-established reticulation degree; or

2) the unsaturated end groups of oligourethane, containing hydrophilic cationic or anionic groups, in an aqueous dispersion, in the presence of radical catalysts and of $\alpha$-$\beta$-ethylenically unsaturated monomers at a temperature not over 100 °C, in order to obtain an aqueous dispersion of polyurethane having a pre-established reticulation degree.

**2.** A process for the preparation of dense polyurethane films according to claim 1 wherein the oligourethane has a molecular weight ranging between 2.000 and 50.000 and contains at least two ethylenically unsaturated end groups.

**3.** A process for the preparation of dense polyurethane films according to anyone of the preceding claims, characterized in that an aqueous dispersion of the polyurethane or of the hydrodispersable polymer having a concentration ranging between 20 and 60% by weight is spread on a plane, and, after complete evaporation of the water, the obtained film is heated in an oven at 40-60 °C for 10-24 hours.

**4.** A process for the preparation of dense polyurethane films according to anyone of the preceding claims 1 to 3, characterized in that it consists in rotating, at a speed ranging between 0.5 and 5 revolutions/minute, a roller coated with polytetrafluoroethylene in an aqueous dispersion of polyurethane or of the hydrodispersable polymer having a concentration ranging between 5 and 20% by weight, and after having obtained a film thickness ranging between 10 and 200 $\mu$m, the film is removed and heated at 40-60 °C for 10-24 hours.

**5.** A process for the preparation of dense polyurethane films according to anyone of the preceding claims 1 to 3, characterized in that an aqueous dispersion of the polymer or of the hydrodispersable polyurethane haying a concentration ranging between 5 and 40% by weight, is poured onto mercury, and after complete evaporation of the water, the film is removed and treated thermically at 40-60 °C.

**6.** Use of the dense polyurethane films obtainable according to anyone of the preceding claims 1 to 5 for the enrichment of oxygen in the air.

## Revendications

**1.** Un procédé de préparation de films de polyuréthanne denses choisis dans le groupe constitué par:

1) des films de polyuréthanne hydrodispersable contenant des groupes ionisables au sein de la molécule en des quantités comprises entre 10 et 60 méq/100 g de produit sec; ou

2) des films d'un polymère hydrodispersable de monomères insaturés $\alpha,\beta$-éthyléniquement modifié par au moins 5% en poids d'un oligo-uréthanne contenant des groupes ionisables et des groupes terminaux $\alpha,\beta$-insaturés fonctionnels de nature acrylique et/ou méthacrylique,

ces films ayant une épaisseur comprise entre 10 et 200 $\mu$m et leur perméabilité vis-à-vis de l'oxygène étant comprise entre $7{,}99.10^{-5}$ et $2{,}66.10^{-6}$ $cm^3$ (STM) $cm/cm^2$ Pa.s ($6.10^{-8}$ et $2.10^{-9}$ $cm^3$ (STM) $cm/cm^2$ s. cm Hg) et un facteur de séparation oxygène/azote supérieur à 2 et pouvant atteindre jusqu'à 4, caractérisé en ce que l'on évapore des dispersions aqueuses obtenues par un procédé comprenant

les étapes suivantes:

a) on prépare tout d'abord un prépolymère de polyisocyanate en faisant réagir à une température ne dépassant pas 100 °C un diisocyanate organique et un mélange constitué d'un diol contenant des groupes ionisables et d'un macroglycol sensiblement linéaire dont le poids moléculaire est compris entre 500 et 5000, en quantités telles que le rapport molaire entre les groupes isocyanate et la somme des groupes hydroxyle du macroglycol et du diol soit compris entre 1,2 et 2,0;

b) on prépare un oligo-uréthanne contenant des groupes terminaux insaturés éthyléniquement en faisant réagir le prépolymère polyisocyanique obtenu ci-dessus avec un hydroxyalkylacrylate et/ou un hydroxyalkylméthacrylate répondant à la formule:

$$CH_2 = \underset{\displaystyle R}{\underset{|}{C}} - COOX \qquad (I)$$

dans laquelle R représente un atome d'hydrogène ou $-CH_3$ et X représente un radical hydroxyalkyle renfermant de 1 à 8 atomes de carbone, à une température inférieure à 150 °C et en quantités telles que le rapport en équivalents entre les groupes NCO isocyanate libres et les groupes OH de l'hydroxyalkylacrylate ou de l'hydroxyalkylméthacrylate répondant à la formule (I) soit compris entre 0,2 et 1,1, et de préférence entre 0,4 et 0,6;

c) on salifie les groupes ionisables libres de l'oligouréthanne en cations ou anions hydrophiles tels que respectivement, ammonium quaternaire ou groupes carboxylate, sulfonate ou phosphonate; et

d) on soumet à un traitement de polymérisation:

1) les groupes terminaux insaturés de l'oligo-uréthanne contenant des groupes hydrophiles cationiques ou anioniques dans une dispersion aqueuse en présence de catalyseurs radicalaires et à une température ne dépassant pas 100 °C en vue d'obtenir une dispersion aqueuse du polyuréthanne présentant un degré de réticulation pré-établi; ou

2) les groupes terminaux insaturés de l'oligo-uréthanne contenant des groupes hydrophiles cationiques ou anioniques dans une dispersion aqueuse en présence de catalyseurs radicalaires et de monomères insaturés $\alpha,\beta$-éthyléniquement à une température ne dépassant pas 100 °C en vue d'obtenir une dispersion aqueuse du polyuréthanne présentant un degré de réticulation pré-établi.

**2.** Un procédé de préparation de films de polyuréthanne denses selon la revendication 1, caractérisé en ce que le poids moléculaire de l'oligo-uréthanne est compris entre 2000 et 50 000 et celui-ci contient au moins deux groupes terminaux insaturés éthyléniquement.

**3.** Un procédé de préparation de films de polyuréthanne denses selon l'une quelconque des revendications précédentes, caractérisé en ce qu'une dispersion aqueuse du polyuréthanne ou du polymère hydrodispersable dont la concentration est comprise entre 20 et 60% en poids est répandue sur un plan et, après évaporation complète de l'eau, le film obtenu est chauffé en étuve à 40 à 60 °C pendant 10 à 24 heures.

**4.** Un procédé de préparation de films de polyuréthanne denses selon l'une quelconque des revendications précédentes, caractérisé en ce qu'il consiste à faire tourner, à une vitesse comprise entre 0,5 et 5 tours par minute, un rouleau revêtu de polytétrafluoroéthylène dans une dispersion aqueuse de polyuréthanne ou du polymère hydrodispersable dont la concentration est comprise entre 5 et 20% en poids et, après avoir obtenu une épaisseur de film comprise entre 10 et 200 µm, à retirer le film et à le chauffer à 40 à 60 °C pendant 10 à 24 heures.

**5.** Un procédé de préparation de films de polyuréthanne denses selon l'une quelconque des revendications 1 à 3, caractérisé en ce qu'une dispersion aqueuse du polymère ou du polyuréthanne hydrodispersable dont la concentration est comprise entre 5 et 40% en poids est versée sur du mercure et, après évaporation complète de l'eau, le film est enlevé puis traité à la chaleur à 40 à 60 °C.

**6.** Utilisation des films de polyuréthanne denses obtenus selon l'une quelconque des revendications 1 à 5, pour l'enrichissement de l'air en oxygène.

## Patentansprüche

1. Verfahren zur Herstellung von dichten Polyurethanfilmen, ausgewählt unter:
   1) Filmen eines wasser-dispergierbaren Polyurethans mit ionisierbaren Gruppen innerhalb des Makromoleküls in Mengen im Bereich zwischen 10 und 60 meq/100 g trockenes Produkt oder
   2) Filmen eines wasser-dispergierbaren Polymeren von $\alpha,\beta$-ethylenisch ungesättigten Monomeren, modifiziert durch zumindest 5 Gew.-% eines Oligourethans, enthaltend ionisierbare Gruppen und funktionelle $\alpha,\beta$-ungesättigte Endgruppen mit Acryl- und/oder Methacryl-Natur,
   wobei die Filme eine Dicke im Bereich von 10 bis 200 $\mu$m aufweisen und eine Permeabilität gegenüber Sauerstoff im Bereich zwischen
   $7{,}99 \cdot 10^{-5}$ und $2{,}66 \cdot 10^{-6}$ $cm^3$ (STP) $cm/cm^2$ Pa.s ($6 \cdot 10^{-8}$ und $2 \cdot 10^{-9}$ $cm^3$ (STP) $cm/cm^2$ sec. cm Hg) und einen Sauerstoff/Stickstoff-Trennfaktor von höher als 2 und bis zu 4 aufweisen, dadurch gekennzeichnet, daS wäßrige Dispersionen einer Verdampfung unterzogen werden, die hergestellt werden gemäß einem Verfahren bestehend aus:
   a) der Herstellung zuerst eines Polyisocyanat-Prepolymeren durch Umsetzung bei einer Temperatur von nicht höher als 100 °C eines organischen Diisocyanats und einer Mischung,bestehend aus einem Diol,enthaltend ionisierbare Gruppen,und einem im wesentlichen linearen Makroglykol mit einem Molekulargewicht im Bereich zwischen 500 und 5000,in derartigen Mengen, daß das Molverhältnis zwischen den Isocyanatgruppen und der Summe der Hydroxygruppen des Makroglykols und des Diols im Bereich zwischen 1,2 und 2,0 liegt;
   b) der Herstellung eines Oligourethans,enthaltend ethylenisch ungesättigte Endgruppen, durch Umsetzung des vorstehend erhaltenen Polyisocyanat-Prepolymeren mit einem Hydroxyalkylacrylat und/oder einem Hydroxyalkylmethacrylat der Formel

$$CH_2 = \underset{\underset{R}{|}}{C} - COOX \qquad (I)$$

   worin R für Wasserstoff oder $-CH_3$ steht und X ein Hydroxyalkylrest mit 1 bis 8 Kohlenstoffatomen ist, bei einer Temperatur unterhalb 150 °C und in einer derartigen Menge, daß das Äquivalent-Verhältnis zwischen den freien Isocyanat-NCO-Gruppen und den OH-Gruppen des Hydroxyalkylacrylats oder -methacrylats der Formel (I) im Bereich zwischen O,2 und 1,1 und vorzugsweise zwischen 0,4 und 0,6 liegt;
   c) der Salzbildung der freien ionisierbaren Gruppen des Oligourethans zu hydrophilen Kationen bzw. Anionen, quaternären Ammonium- und Carboxyl-, Sulfon- oder Phosphon-Gruppen und
   d) dem Unterwerfen einer Polymerisationsbehandlung:
      1) der ungesättigten Endgruppen des Oligourethans, enthaltend hydrophile kationische oder anionische Gruppen, in einer wäßrigen Dispersion in Gegenwart von radikalischen Katalysatoren bei einer Temperatur nicht über 100 °C, um eine wäßrige Dispersion des Polyurethans mit einem zuvor festgelegten Vernetzungsgrad zu erhalten, oder
      2) der ungesättigten Endgruppen des Oligourethans, enthaltend hydrophile kationische oder anionische Gruppen, in einer wäßrigen Dispersion in Gegenwart von radikalischen Katalysatoren und der $\alpha,\beta$-ethylenisch ungesättigten Monomeren bei einer Temperatur nicht über 100 °C, um eine wäßrige Dispersion des Polyurethans mit einem zuvor festgelegten Vernetzungsgrad zu erhalten.

2. Verfahren zur Herstellung von dichten Polyurethanfilmen gemäß Anspruch 1, worin das Oligourethan ein Molekulargewicht im Bereich zwischen 2 000 und 50 000 besitzt und zumindest zwei ethylenisch ungesättigte Endgruppen aufweist.

3. Verfahren zur Herstellung von dichten Polyurethanfilmen gemäß einem der vorhergehenden Ansprüche, dadurch gekennzeichnet, daß eine wäßrige Dispersion des Polyurethans oder des wasser-dispergierbaren Polymeren mit einer Konzentration im Bereich zwischen 20 und 60 Gew.-% auf einer ebenen Fläche ausgebreitet wird und nach vollständiger Verdampfung des Wassers der erhaltene Film in einem Ofen bei 40 bis 60 °C 10 bis 24 Stunden erhitzt wird.

4. Verfahren zur Herstellung von dichten Polyurethanfilmen gemäß einem der vorhergehenden Ansprüche 1 bis 3, dadurch gekennzeichnet, daß es darin besteht, mit einer Geschwindigkeit im Bereich zwischen 0,5 und 5 Umdrehungen/Minute eine Walze zu rotieren, die beschichtet ist mit Polytetrafluorethylen in einer wäßrigen Dispersion von Polyurethan oder dem wasser-dispergierbaren Polymeren mit einer Konzentration im Bereich zwischen 5 und 20 Gew.-% und daß nach Erzielung einer Filmdicke im Bereich zwischen 10 und 200 µm der Film entfernt und bei 40 bis 60 ° C 10 bis 24 Stunden erhitzt wird.

5. Verfahren zur Herstellung von dichten Polyurethanfilmen gemäß einem der vorhergehenden Ansprüche 1 bis 3, dadurch gekennzeichnet, daß eine wäßrige Dispersion des Polymeren oder des wasser-dispergierbaren Polyurethans mit einer Konzentration im Bereich zwischen 5 und 40 Gew.-% auf Quecksilber gegossen und nach vollständiger Verdampfung des Wassers der Film entfernt und thermisch bei 40 bis 60 ° C behandelt wird.

6. Verwendung der gemäß einem der vorhergehenden Ansprüche 1 bis 5 erhältlichen dichten Polyurethanfilme für die Anreicherung von Sauerstoff in der Luft.